# FASCICULE DE BREVET EUROPEEN

(11) **EP 3 106 232 B1**
(45) Date de publication et mention de la délivrance du brevet: **29.08.2018**
(21) Numéro de dépôt: 16174807.4
(22) Date de dépôt: 16.06.2016
(51) Int. Cl.: B05B 1/30, B05B 12/08, G05D 16/06

(54) **RÉGULATEUR DE PRESSION, GAMME DE RÉGULATEURS DE PRESSION ET SYSTÈME DE PULVÉRISATION ASSOCIÉS**
DRUCKREGLER, ENTSPRECHENDE AUSWAHL VON DRUCKREGLERN UND ENTSPRECHENDES SPRÜHSYSTEM
PRESSURE REGULATOR, AND ASSOCIATED RANGE OF PRESSURE REGULATORS AND SPRAY SYSTEM

(30) Priorité: 16.06.2015 FR 1555506
(43) Date de publication de la demande: 21.12.2016
(73) Titulaire: EXEL INDUSTRIES, 51200 Epernay (FR)
(72) Inventeur: LAVILLE, Laetitia, 69400 VILLEFRANCHE SUR SAONE (FR); BARON, Sébastien, 01600 TREVOUX (FR)
(74) Mandataire: Lavoix

(56) Documents cités:
- EP-A2- 1 672 458
- US-A- 3 478 776

## Description

L'invention concerne un régulateur de pression d'un fluide et une gamme de régulateurs de pression qui comprend au moins deux tels régulateurs de pression.

L'invention concerne également un système de pulvérisation qui comporte un tel régulateur de pression.

Dans le domaine de la pulvérisation d'un fluide, tel que de l'eau, il est connu d'utiliser un régulateur de pression disposé entre un réservoir de fluide et une buse de pulvérisation du fluide, afin de réguler la pression du fluide pulvérisé. Le régulateur de pression permet de délivrer un fluide de pression constante à la buse de pulvérisation et est par exemple intégré dans un système de pulvérisation, tel qu'un nettoyeur haute pression.

Il est ainsi connu de EP-A2-1 672 458 un régulateur de pression qui comporte un dispositif de régulation de la pression d'un fluide et un corps principal muni d'une entrée de réception du fluide, d'un logement de réception du dispositif de régulation et d'une sortie de distribution du fluide. Dans un tel régulateur, le dispositif de régulation est positionné entre l'entrée et la sortie et permet de réguler la pression du fluide distribué sur la sortie. Le document US3478776A (ROYER JOHN A, 18 novembre 1969) décrit également un régulateur de pression. La fabrication et la structure d'un tel régulateur de pression restent complexes et l'assemblage des différents éléments formant le régulateur de pression n'est pas optimisé.

C'est à ces inconvénients qu'entend plus particulièrement remédier l'invention en proposant un régulateur de pression dont la fabrication et la structure sont simplifiées.

A cet effet, l'invention a pour objet un régulateur de pression comprenant un dispositif de régulation de la pression d'un fluide et un corps principal comportant une entrée de réception du fluide, une paroi circonférentielle délimitant un logement de réception du dispositif de régulation et une sortie de distribution du fluide, le dispositif de régulation étant positionné dans le logement entre l'entrée de réception du fluide et la sortie de distribution du fluide et comportant :
- un corps de siège définissant un orifice de passage du fluide,
- un clapet mobile par rapport au corps de siège, suivant un axe central du corps de siège, entre une position fermée dans laquelle le clapet obstrue l'orifice de passage et une position ouverte dans laquelle le clapet libère l'orifice de passage,
- une membrane mécaniquement solidaire du clapet et
- un ressort d'appui de la membrane contre le corps de siège, propre à exercer un effort d'appui sur la membrane, la membrane étant mobile par rapport au corps de siège entre une position ouverte, dans laquelle la membrane définit avec le corps de siège un espace de passage du fluide ayant traversé l'orifice de passage, propre à guider le fluide vers la sortie, et une position fermée dans laquelle la membrane est en contact étanche avec le corps de siège et obstrue l'espace de passage,

Conformément à l'invention, le corps de siège est une pièce distincte du corps principal et est muni d'une gorge périphérique de réception d'un joint d'étanchéité propre à être en appui contre la paroi circonférentielle ou contre une jupe d'un culot disposée entre la paroi circonférentielle et le corps de siège.

Grâce à l'invention, la structure du corps principal est simplifiée et l'assemblage des différents éléments composant le régulateur de pression est plus aisé. En effet, le fait que le corps de siège soit une pièce distincte du corps principal permet de faciliter la fabrication du corps principal en réalisant séparément le corps de siège et le corps principal. De plus, cela permet un assemblage unilatéral des différents éléments composant le dispositif de régulation dans le corps principal, ce qui simplifie la structure du corps principal et facilite l'assemblage. En outre, le fait d'associer un joint d'étanchéité au corps de siège permet de faciliter l'insertion et l'assemblage du corps de siège dans le logement de réception du dispositif de régulation.

Selon des aspects avantageux mais non obligatoires de l'invention, un tel régulateur de pression comprend une ou plusieurs des caractéristiques suivantes, prises isolément ou selon toutes les combinaisons techniquement admissibles :
- le ressort est configuré pour que le clapet mobile soit en position fermée et la membrane en position ouverte lorsque le fluide exerce sur le clapet mobile et la membrane un effort supérieur à une première valeur de seuil prédéterminée, et pour que la membrane soit en position fermée et le clapet mobile en position ouverte lorsque le fluide exerce sur le clapet mobile et la membrane un effort inférieur à une deuxième valeur de seuil prédéterminée, la première valeur de seuil prédéterminée étant supérieure à la deuxième valeur de seuil prédéterminée ;
- le clapet mobile comprend une extrémité amont d'obturation de l'orifice de passage, une extrémité aval et une tige s'étendant à travers l'orifice de passage et reliant l'extrémité amont à l'extrémité aval, alors que le dispositif de régulation comprend un tampon faisant l'interface entre, d'une part, le ressort et, d'autre part, la membrane et le clapet mobile ;
- le corps principal comprend, suivant l'axe central, une extrémité ouverte d'assemblage du dispositif de régulation de la pression avec le corps principal et une extrémité fermée, la paroi circonférentielle reliant l'extrémité ouverte et l'extrémité fermée ;
- le joint d'étanchéité est en appui contre la paroi circonférentielle, et le dispositif de régulation comprend un couvercle fixé au corps principal, le couvercle comprenant un contour périphérique définissant un espace de réception du ressort, le contour périphérique comprenant, suivant l'axe central et par rapport au corps de siège, une extrémité distale d'appui du ressort et une extrémité proximale, définissant une ouverture en regard de la membrane, le ressort étant positionné entre l'extrémité distale et la membrane ;
- le corps de siège comprend une paroi périphérique délimitant une zone de réception de la membrane et de l'extrémité proximale du couvercle et la membrane comprend un voile d'appui contre le corps de siège s'étendant radialement à l'axe central et une paroi cylindrique externe s'étendant depuis le voile d'appui en direction du couvercle, la paroi cylindrique externe étant coincée radialement entre la paroi périphérique et l'extrémité proximale ;
- le dispositif de régulation comprend un organe de réglage de la pression du fluide en sortie, l'organe de réglage comprenant le culot et une pièce de réglage de la position du culot par rapport au corps de siège, la pièce de réglage définissant au moins deux positions de maintien du culot par rapport au corps de siège, décalées l'une par rapport à l'autre suivant l'axe central et pour au moins une position de maintien du culot, le joint d'étanchéité est en contact étanche contre la jupe du culot ;
- le culot comprend une paroi de contact, en contact avec le ressort, s'étendant radialement à la jupe, alors que le ressort est positionné entre la membrane et la paroi de contact, et les positions de maintien du culot correspondent à des positions différentes de la paroi de contact par rapport au corps de siège ;
- pour l'une des positions de maintien du culot par rapport au corps de siège, la jupe et le joint d'étanchéité définissent un espace de circulation de fluide reliant l'entrée à la sortie ;
- la pièce de réglage définit au moins trois positions de maintien du culot décalées les unes par rapport aux autres suivant l'axe central, alors que la jupe comprend une gorge périphérique de réception d'un joint d'étanchéité supplémentaire en contact étanche avec la paroi circonférentielle et que, pour deux des positions de maintien du culot, le joint d'étanchéité est en contact étanche contre la jupe.

L'invention concerne en outre une gamme de régulateurs de pression, comprenant au moins deux régulateurs de pression. Conformément à l'invention, la gamme comprend un premier régulateur tel que défini ci-dessus et un deuxième régulateur tel que défini ci-dessus, et dans les premier et deuxième régulateurs, le corps de siège, le clapet et la membrane sont identiques.

L'invention concerne également un système de pulvérisation comprenant un réservoir de fluide, une buse de pulvérisation du fluide et un régulateur de pression monté entre le réservoir de fluide et la buse de pulvérisation. Conformément à l'invention, le régulateur de pression est tel que défini ci-dessus.

L'invention sera mieux comprise et d'autres avantages de celle-ci apparaîtront plus clairement à la lumière de la description qui va suivre, donnée uniquement à titre d'exemple non limitatif et faite en se référant aux dessins annexés sur lesquels :
- la figure 1 est une représentation schématique d'un système de pulvérisation qui comprend un régulateur de pression conforme à un premier mode de réalisation de l'invention ;
- la figure 2 est une représentation en perspective du régulateur de pression du système de la figure 1 ;
- la figure 3 est une vue en perspective éclatée du régulateur de pression de la figure 2 ;
- la figure 4 est une coupe du régulateur de pression suivant le plan IV à la figure 2;
- la figure 5 est une représentation en perspective d'un régulateur de pression conforme à un deuxième mode de réalisation de l'invention ;
- la figure 6 est une vue en perspective éclatée du régulateur de pression de la figure 5 ;
- la figure 7 est une coupe du régulateur de pression suivant le plan VII à la figure 5;
- la figure 8 est une représentation en perspective partielle avec arrachement du régulateur de pression des figures 5 à 7 dans une première configuration ; et
- la figure 9 est une représentation analogue à la figure 8 du régulateur de pression dans une deuxième configuration.

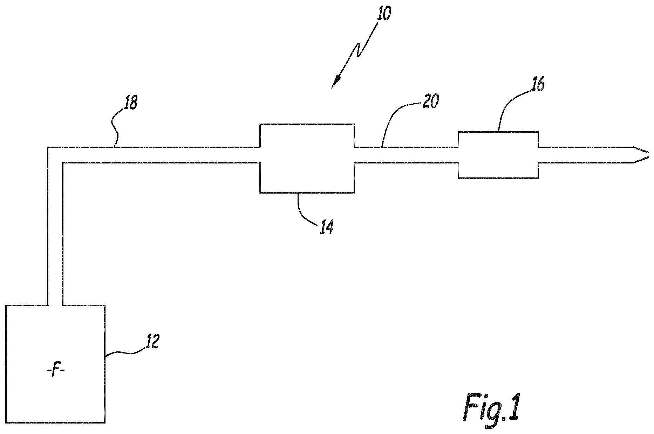

Le système de pulvérisation 10 visible à la figure 1 comprend un réservoir 12 de fluide F, un régulateur de pression 14 conforme à un premier mode de réalisation de l'invention et une buse de pulvérisation 16.

Le système de pulvérisation 10 comprend également un premier conduit 18 propre à transmettre le fluide F du réservoir 12 vers le régulateur de pression 14 et un deuxième conduit 20 propre à transmettre le fluide F ayant traversé le régulateur de pression 14 à la buse de pulvérisation 16.

Le système de pulvérisation 10 est, par exemple, un nettoyeur haute pression et le fluide F est, par exemple, de l'eau.

Le régulateur de pression 14 est propre à réguler la pression du fluide F en provenance du réservoir 12 et du premier conduit 18 et à délivrer à la buse de pulvérisation 16, via le deuxième conduit 20, le fluide F à une pression régulée.

En d'autres termes, le régulateur de pression 14 est monté entre, d'une part, le réservoir de fluide 12 et le premier conduit 18 et, d'autre part, le deuxième conduit 20 et la buse de pulvérisation 16.

La buse de pulvérisation 16 est configurée pour pulvériser le fluide F. La buse de pulvérisation 16 comprend, par exemple, un organe, non représenté, de commande manuelle de la pulvérisation du fluide F et est propre à pulvériser le fluide F en fonction de la position de l'organe de commande manuelle.

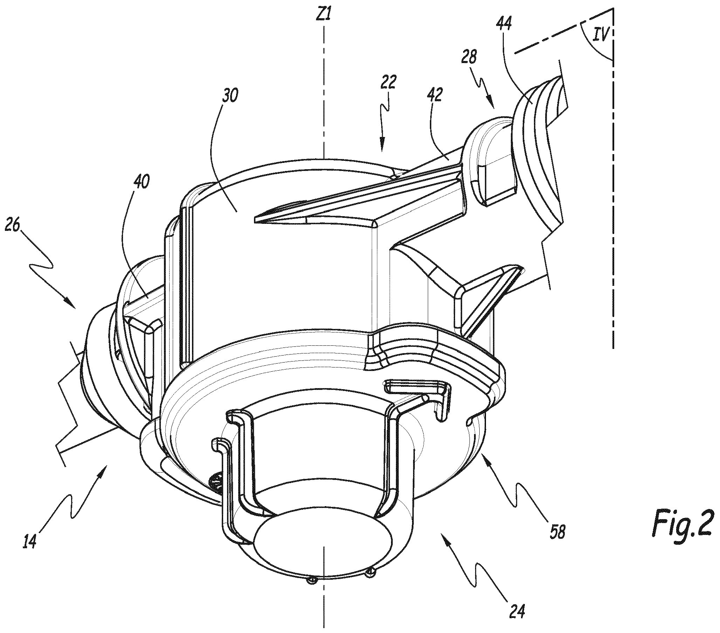

Comme représenté plus en détail aux figures 2 à 4, le régulateur de pression 14 comprend un corps principal 22 et un dispositif 24 de régulation de la pression du fluide F.

Le corps principal 22 comporte une entrée 26 de réception du fluide F et une sortie 28 de distribution du fluide F.

Le corps principal 22 comprend une paroi circonférentielle 30 délimitant un logement 32 de réception du dispositif de régulation 24 centré sur un axe Z1, qui est vertical aux figures 2 à 4.

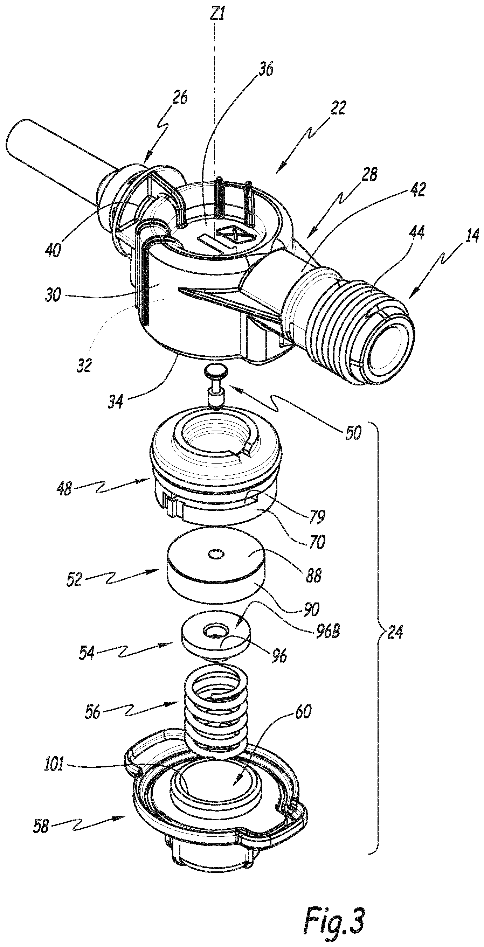

Comme représenté à la figure 3, le corps principal 22 comprend également, suivant l'axe Z1, une extrémité ouverte 34 d'assemblage du dispositif de régulation de la pression 24 avec le corps principal 22 et une extrémité fermée 36.

Le corps principal 22 comprend en outre, une première partie 40 d'amenée du fluide F reçu sur l'entrée 26 dans le logement 32 et une deuxième partie 42 reliant le logement 32 et la sortie 28.

L'entrée 26 comprend des moyens, non représentés, de connexion du corps principal 22 au premier conduit 18.

La sortie 28 comprend un embout 44 de fixation au deuxième conduit 20.

La paroi circonférentielle 30 relie l'extrémité ouverte 34 et l'extrémité fermée 36.

Le dispositif de régulation 24 est positionné dans le logement 32 entre l'entrée 26 et la sortie 28.

Le dispositif de régulation 24 comprend un corps de siège 48, un clapet 50 mobile par rapport au corps de siège 48, suivant un axe central Z1 du corps du siège 48, et une membrane 52 mécaniquement solidaire du clapet 50.

L'axe central s'étend sensiblement parallèlement à l'axe Z1, est confondu avec l'axe Z1 sur les figures 2 à 4 et porte la même référence par la suite.

Le dispositif de régulation 24 comprend également un tampon 54, un ressort 56 d'appui de la membrane 52 contre le corps de siège 48 et un couvercle 58 mécaniquement solidaire du corps principal 22 et qui définit un espace 60 de réception du ressort 56.

Le corps de siège 48 comprend un premier siège 62, qui définit un orifice 64 de passage du fluide F et qui est associé au clapet mobile 50. Plus précisément le premier siège 62 entoure l'orifice de passage 64.

Le corps de siège 48 comprend un deuxième siège 66 associé à la membrane 52.

Le corps de siège 48 comprend une paroi périphérique 70, qui délimite une zone 72 de réception de la membrane 52 et d'une extrémité 74 proximale du couvercle 58 par rapport au corps de siège 48. La paroi périphérique 70 est de forme cylindrique.

Le corps de siège 48 comprend, le long de la paroi périphérique 70, une gorge périphérique 76 de réception d'un premier joint d'étanchéité 78 propre à être en appui contre la surface intérieure de la paroi circonférentielle 30. Le premier joint d'étanchéité 78 est un joint torique, par exemple, en élastomère.

Le corps de siège 48 comprend également, au niveau de la paroi périphérique 70, un orifice traversant 79, suivant une direction radiale à l'axe central Z1, qui est relié à la sortie 28.

Le corps de siège 48 est une pièce distincte du corps principal 22. Il n'est donc pas monobloc avec le corps principal 22.

Le corps de siège 48 est mécaniquement solidaire du corps principal 22. Il est, par exemple, soudée au corps principal 22.

Le clapet 50 est mobile entre une position fermée dans laquelle le clapet 50 obstrue l'orifice 64 et est en contact étanche avec le premier siège 62 et une position ouverte dans laquelle le clapet 50 libère l'orifice 64.

Le clapet 50 comprend une extrémité amont 80, une extrémité aval 82 et une tige 84, qui relie l'extrémité amont 80 à l'extrémité aval 82.

L'extrémité amont 80 est de forme adaptée pour venir en appui contre le premier siège 62, afin d'obstruer l'orifice de passage 64 lorsque le clapet 50 est en position fermée.

L'extrémité aval 82 comprend un renflement 85 destiné à coopérer avec le tampon 54 afin d'être fixée au tampon 54.

La tige 84 s'étend à travers l'orifice de passage 64.

La membrane 52 est mécaniquement solidaire du clapet 50.

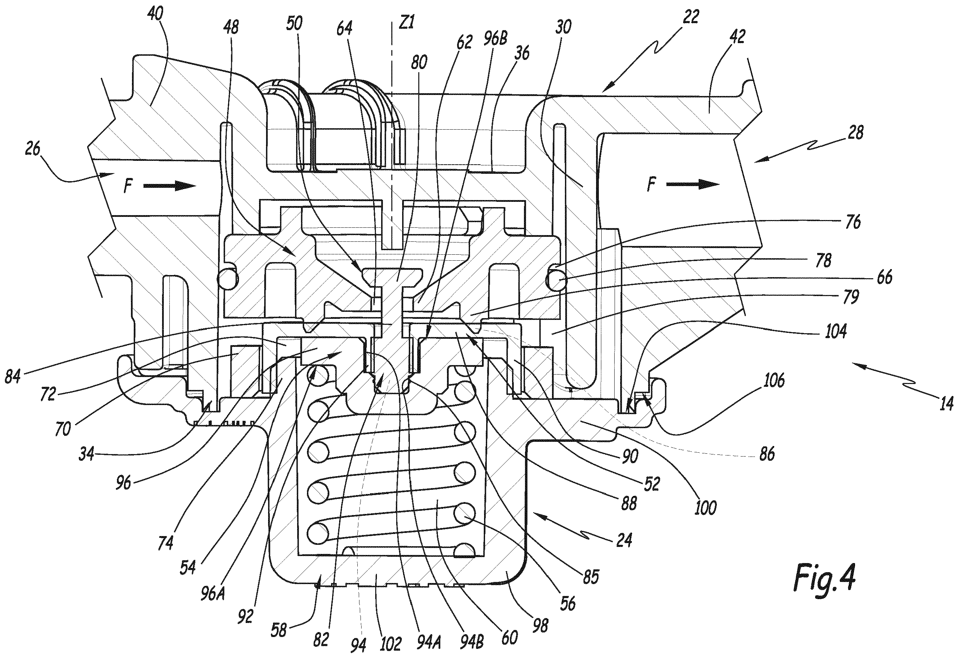

La membrane 52 est mobile entre, une position ouverte, dans laquelle la membrane 52 définit avec le deuxième siège 66 un espace 86 de passage du fluide F ayant traversé l'orifice de passage 64, et une position fermée, dans laquelle la membrane 52 est en contact étanche avec le deuxième siège 66 et obstrue l'espace de passage 86. Sur la figure 4, la membrane 52 est représentée en position fermée.

L'orifice de passage 64 est centré sur l'axe central Z1. Le fluide F traverse l'orifice de passage 64 sensiblement parallèlement à l'axe central Z1 et l'espace de passage 86 sensiblement radialement à l'axe central Z1.

La membrane 52 comprend un voile 88 d'appui contre le deuxième siège 66, s'étendant radialement à l'axe central Z1.

La membrane 52 comprend également une paroi cylindrique externe 90 et une paroi cylindrique interne 92, qui s'étendent depuis le voile d'appui 88 en direction de l'extrémité ouverte 34.

La membrane 52 est, par exemple, en élastomère.

Le voile d'appui 88 est propre à venir en appui contre le deuxième siège 66, sous l'effet d'un effort d'appui E1 exercé par le ressort 56 sur la membrane 52, en direction du deuxième siège 66.

L'effort d'appui E1 est exercé dans un sens opposé à un sens de l'écoulement du fluide F à travers le dispositif de régulation 24, au niveau de l'orifice de passage 64.

La paroi cylindrique externe 90 est coincée, radialement à l'axe central Z1, entre la paroi périphérique 70 et l'extrémité proximale 74 du couvercle 58.

La paroi cylindrique interne 92 est coincée radialement à l'axe central Z1, entre le tampon 54 et l'extrémité aval 82, de sorte à être mécaniquement solidaire du clapet mobile 50 et du tampon 54.

La membrane 52 assure l'étanchéité entre le corps de siège 48 et l'espace 60 de réception du ressort 56, grâce au voile d'appui 88 et au coincement de la paroi cylindrique externe 90 entre la paroi périphérique 70 et l'extrémité proximale 74 du couvercle 50 et de la paroi cylindrique interne 92 entre le tampon 54 et l'extrémité aval 82.

Le tampon 54 fait l'interface entre, d'une part, le ressort 56 et, d'autre part, la membrane 52 et notamment le voile d'appui 88.

Le tampon 54 comprend un logement 94 de réception de l'extrémité aval 82 et de la paroi cylindrique interne 92 et une aile 96 de contact avec le voile d'appui 88.

Le tampon 54 est propre à transmettre l'effort d'appui E1 à la membrane 52 et au clapet 50.

Le logement 94 comprend, suivant l'axe central Z1, en direction de l'extrémité ouverte 34, une première partie cylindrique 94A et une deuxième partie cylindrique 94B prolongeant la première partie cylindrique 94A.

La deuxième partie cylindrique 94B reçoit un bout de l'extrémité aval 82 et coopère avec le renflement 85, afin de solidariser mécaniquement le clapet 50 au tampon 54.

La première partie cylindrique 94A a un diamètre supérieur à celui de la deuxième partie cylindrique 94B et reçoit l'extrémité aval 82 et la paroi cylindrique interne 92, qui est mécaniquement solidarisée au tampon 54 et au clapet mobile 50 par coincement entre l'extrémité aval 82 et une paroi interne de la première partie cylindrique 94A.

L'aile de contact 96 comprend une face de contact 96A avec le ressort 56, sur laquelle le ressort 56 exerce l'effort d'appui E1. La face de contact 96A est en contact avec le ressort 56.

L'aile de contact 96 comprend également à l'opposé de la face de contact 96A, une autre face de contact 96B avec le voile d'appui 88.

Le ressort 56 est propre à exercer l'effort d'appui E1 sur la membrane 52 et le clapet 50 à travers le tampon 54.

Le ressort 56 est positionné suivant l'axe central Z1, entre la face de contact 96A et le couvercle 58 et exerce l'effort d'appui E1 sur le tampon 54 qui le transmet à la membrane 52 et au clapet 50.

Plus précisément, le ressort 56 est positionné dans l'espace de réception 60 et est coincé entre la face de contact 96A et le couvercle 58.

Le ressort 56 est configuré pour que le clapet mobile 50 soit en position fermée et la membrane 52 en position ouverte lorsque le fluide F exerce sur le clapet mobile 50 et la membrane 52 un effort, suivant l'axe central Z1, supérieur à une première valeur de seuil prédéterminée, et pour que la membrane 52 soit en position fermée et le clapet mobile 50 en position ouverte lorsque le fluide F exerce sur le clapet mobile 50 et la membrane 52 un effort, suivant l'axe central Z1, inférieur à une deuxième valeur de seuil prédéterminée.

Le ressort 56 est également configuré pour que lorsque le fluide F exerce sur le clapet mobile 50 et la membrane 52 un effort, suivant l'axe central Z1, compris entre la première valeur de seuil prédéterminée et la deuxième valeur de seuil prédéterminée, l'extrémité amont 80 soit distante du premier siège 62 et le voile d'appui 88 soit distant du deuxième siège 66. Dans cette configuration, le fluide F traverse alors l'orifice de passage 64 puis l'espace de passage 86.

En d'autres termes la raideur et/ou la longueur du ressort 56 sont, par exemple, configurées, pour qu'en fonction de l'effort exercé par le fluide F sur le clapet mobile 50 et la membrane 52, le clapet mobile 50 et la membrane 52 soient dans les positions présentées ci-dessus.

Plus généralement le ressort 56 est configuré pour que, pour une distance donnée sur laquelle s'étend le ressort entre la face de contact 96A et le couvercle 58, le clapet mobile 50 et la membrane 52 soient dans les positions présentées ci-dessus, en fonction de l'effort exercé par le fluide F sur le clapet mobile 50 et la membrane 52.

La première valeur de seuil prédéterminée est par exemple égale à 13.5 Newton et correspond à une pression du fluide F de 1.2 Bars et est supérieure à la deuxième valeur de seuil prédéterminée, qui est par exemple égale à 11.3 Newton et correspond à une pression du fluide F de 1 Bar.

Le couvercle 58 comprend avantageusement, une ouverture, non représentée, traversante suivant l'axe central Z1 et adaptée pour laisser passer de l'air entre l'espace de réception 60 et l'extérieur du régulateur de pression 14.

Le couvercle 58 comprend un contour périphérique 98 et une aile 100 de fixation au corps principal 22.

Avantageusement, le couvercle 58 est soudé au corps principal 22.

Le contour périphérique 98 délimite l'espace de réception 60 du ressort 56, et comprend, suivant l'axe central Z1, l'extrémité proximale 74, qui définit une ouverture 101 en regard de la membrane 52, et une extrémité distale 102 d'appui du ressort 56. Le contour périphérique 98 est de forme cylindrique
L'extrémité proximale 74 est en appui radial contre la paroi cylindrique externe 90 et maintien la paroi cylindrique externe 90 en appui contre la paroi périphérique 70.

L'aile de fixation 100 s'étend radialement à l'axe central autour du contour périphérique 98.

L'aile de fixation 100 est en appui étanche contre une extrémité de la paroi périphérique 70.

L'aile de fixation 100 comprend une face 104 de fixation au corps principal 22, de forme complémentaire à une paroi 106 de fixation du corps principal 22. La face de fixation 104 et la paroi de fixation 106 sont de formes adaptées pour, suite à la fixation du couvercle 58 au corps principal 22, assurer l'étanchéité entre le logement 32 et l'extérieur du régulateur de pression 14.

L'extrémité d'appui 102 est en contact avec le ressort 56, qui est positionné entre l'extrémité d'appui 102 et la face de contact 96A.

L'extrémité d'appui 102 comprend, par exemple, l'ouverture traversante adaptée pour laisser passer de l'air entre l'espace de réception 60 et l'extérieur du régulateur de pression 14.

Le fait que le corps de siège 48 soit distinct du corps principal 22 permet de simplifier la structure et la fabrication du corps principal 22.

Par ailleurs, le fait que le corps de siège 48 soit une pièce non monobloc avec le corps principal 22 permet également un assemblage unilatéral, c'est-à-dire par un seul côté, des différents éléments composant le dispositif de régulation 24 dans l'espace de réception 60. Ainsi, il n'est pas nécessaire que les deux extrémités du corps principal suivant l'axe Z1 soit ouverte, et une ouverture d'un seul côté, c'est-à-dire au niveau de la seule extrémité 34 est nécessaire, alors que l'extrémité 36 est fermée.

En outre, l'utilisation du premier joint d'étanchéité 78 entre le corps de siège 48 et la paroi circonférentielle 30 permet de faciliter l'assemblage du corps de siège 48 sur le corps principal 22 et de garantir une étanchéité entre la paroi circonférentielle 30 et la paroi périphérique 70.

Le corps de siège 48, le clapet mobile 50, la membrane 52 et le ressort 56 permettent de garantir la régulation de la pression du fluide délivré sur la sortie 28. En effet, le corps de siège 48, le clapet mobile 50, la membrane 52 et le ressort 56 permettent de délivrer sur la sortie 28 un fluide à pression constante, dont la pression dépend des caractéristiques du ressort 56, telles que la raideur et la longueur du ressort, ainsi que de la distance, mesurée suivant l'axe central Z1, entre l'extrémité d'appui 102 et la face de contact 96A.

De plus, le premier joint d'étanchéité 78 et le fait que la membrane 52 assure l'étanchéité de l'espace de réception 60 vis-à-vis du fluide ayant traversé l'orifice de passage 64, permettent d'avoir une régulation précise de la pression, puisque le fluide s'écoule seulement à travers l'orifice de passage 64, l'espace de passage 86 et l'orifice traversant 79. Ainsi, c'est principalement l'effort d'appui E1 appliqué par le ressort 56 qui détermine la pression du fluide en sortie 28.

L'orifice de passage 64, l'espace de passage 86 et l'orifice traversant 79 définissent un conduit de circulation de fluide reliant l'entrée 26 à la sortie 28 et permettent de délivrer le fluide F à pression régulée sur la sortie 28, tandis que la membrane 52 et l'aile de fixation 100 forment une paroi étanche dudit conduit de circulation.

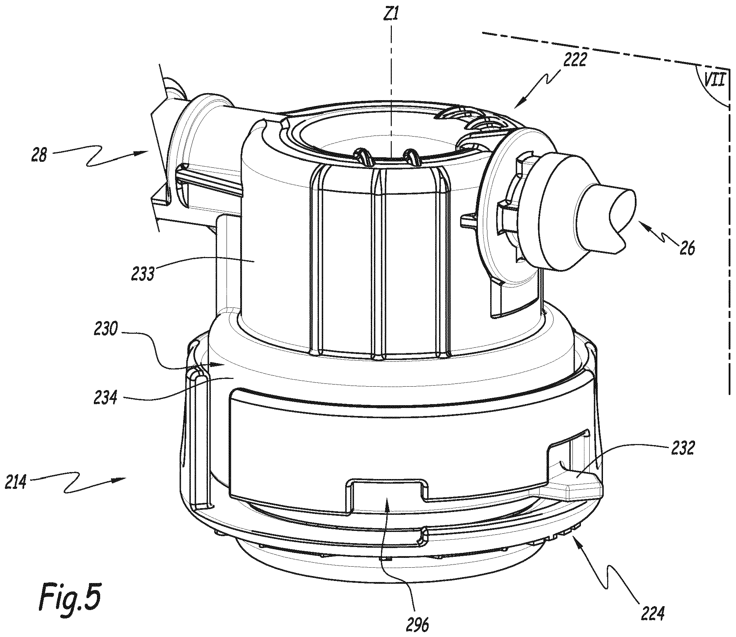

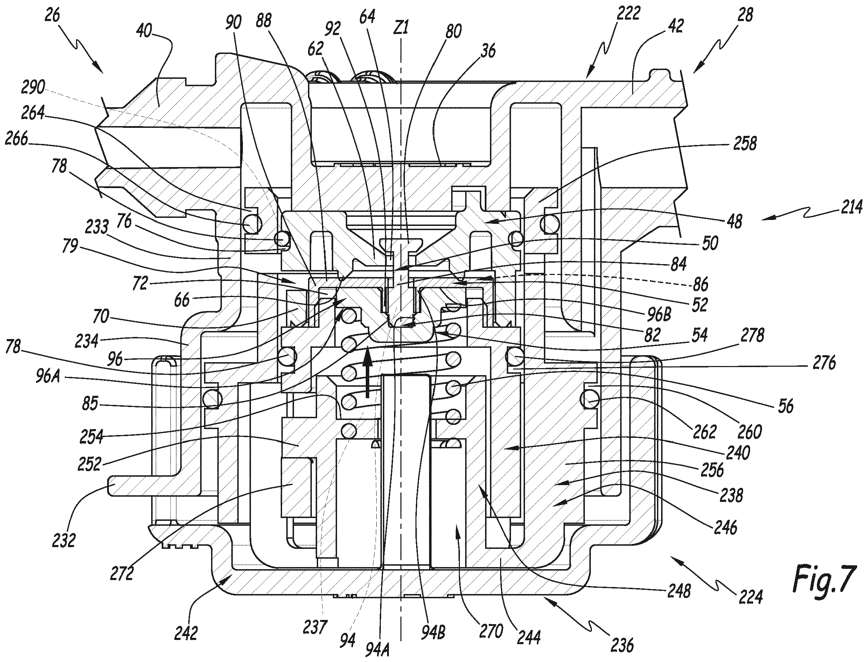

Aux figures 5 à 9, un régulateur de pression 214, selon le deuxième mode de réalisation de l'invention, est illustré.

Le régulateur de pression 214 est propre à être monté dans le système de pulvérisation 10, à la place du régulateur de pression 14.

Dans la suite de la description, les éléments du régulateur de pression 214 similaires aux éléments du régulateur de pression 14 ne sont pas décrits à nouveau et portent les mêmes références. Le fonctionnement du régulateur de pression 214 est comparable à celui du régulateur de pression 14. Essentiellement les différences entre le premier et le deuxième mode de réalisation seront décrites par la suite.

Le régulateur de pression 214 comprend un corps principal 222 et un dispositif 224 de régulation de la pression du fluide F.

Le corps principal 222 comporte une entrée 26 de réception du fluide F et une sortie 28 de distribution du fluide F.

Le corps principal 222 comprend une paroi circonférentielle 230 délimitant un logement 32 de réception du dispositif de régulation 224 centré sur un axe Z1, qui est vertical aux figures 5 à 9.

Le corps principal 222 comprend, une extrémité ouverte 34 d'assemblage du dispositif de régulation de la pression 24 avec le corps principal 22, une extrémité fermée 36, une première partie 40 d'amenée du fluide F reçu sur l'entrée 26 dans le logement 32 et une deuxième partie 42 reliant le logement 32 à la sortie 28.

Le corps principal 222 comprend, en outre, une languette 232 s'étendant radialement à la paroi circonférentielle 130. La languette 232 est en saillie du reste du corps principal 222, vers l'extérieur du corps principal 222, c'est-à-dire dans une direction opposée à l'axe Z1.

La paroi circonférentielle 230 relie l'extrémité ouverte 34 et l'extrémité fermée 36.

La paroi circonférentielle 230 définit une première portion de cylindre 233 et une deuxième portion de cylindre 234.

Suivant l'axe Z1, la première portion de cylindre 233 s'étend entre l'extrémité fermée 36 et la deuxième portion de cylindre 234, tandis que la deuxième portion de cylindre 234 s'étend entre la première portion de cylindre 232 et l'extrémité ouverte 34.

Le diamètre de la première portion de cylindre 232 est inférieur au diamètre de la deuxième portion de cylindre 233.

Le dispositif de régulation 224 comprend le corps de siège 48, le clapet mobile 50 suivant l'axe central Z1, la membrane 52, le tampon 54, et le ressort 56.

Le dispositif de régulation 224 comprend, en outre, un organe 236 de réglage de la pression du fluide F en sortie 28 qui définit un espace 237 de réception du ressort 56.

Le corps de siège 48 est mécaniquement solidaire du corps principal 222 et est, par exemple, soudée au corps principal 222.

La paroi cylindrique externe 90 de la membrane 52 est coincée radialement à l'axe central Z1, entre la paroi périphérique 70 du corps de siège 48 et l'organe de réglage 236.

Le ressort 56 est positionné suivant l'axe central Z1 entre la face de contact 96A et l'organe de réglage 236 et exerce l'effort d'appui E1 sur le tampon 54 qui le transmet à la membrane 52 et au clapet 50.

Plus précisément, le ressort 56 est positionné dans l'espace de réception 237 et est coincé entre la face de contact 96A et l'organe de réglage 236.

L'organe de réglage 236 comprend un culot 238 mobile, suivant l'axe central Z1, par rapport au corps de siège 48 et une pièce 240 de réglage de la position du culot 238 par rapport au corps de siège 48.

L'organe de réglage 236 comprend également un bouton 242 de modification de la position du culot 238 par rapport au corps de siège 48.

Le culot 238 comprend une aile principale 244 en regard de l'extrémité ouverte 34 et une jupe périphérique 246 s'étendant, suivant l'axe central Z1, depuis l'aile principale 244 en direction de l'extrémité fermée 36.

Le culot 238 comprend également un fût interne 248 s'étendant, suivant l'axe central Z1, depuis l'aile principale 244 vers le corps de siège 48, un pion 252 s'étendant radialement à la jupe 246 et une paroi de contact 254 s'étendant radialement à la jupe 246.

Le ressort 56 est positionné entre le tampon 54 et la paroi de contact 254. Plus précisément, la paroi de contact 254 est en contact avec une extrémité du ressort et la face de contact 96A est en contact avec une autre extrémité du ressort 56.

La jupe 246 est disposée entre la paroi circonférentielle 230 et la paroi périphérique 70. Ainsi, le premier joint d'étanchéité 78 est propre à être en appui contre la jupe périphérique 246
La jupe 246 comprend, par rapport à l'extrémité ouverte 34 et à l'aile principale 244, une partie cylindrique proximale 256 prolongée, suivant l'axe central Z1, par une partie cylindre distale 258.

La partie cylindrique proximale 256 est positionnée en regard de la deuxième portion de cylindre 234 et la partie cylindrique distale 258 est positionnée en regard de la première portion de cylindre 233.

La partie cylindrique proximale 256 est munie d'une gorge périphérique 260 de réception d'un deuxième joint d'étanchéité 262.

La gorge périphérique 260 et le deuxième joint 262 sont positionnés, suivant l'axe central Z1, à proximité de l'extrémité ouverte 34, c'est-à-dire par exemple à 2 cm de l'extrémité ouverte 34.

Le deuxième joint 262 est propre à être en contact étanche contre une face interne de la deuxième portion de cylindre 234, quelle que soit la position du culot 238. Le deuxième joint 262 assure l'étanchéité entre la paroi circonférentielle 230 et la jupe 246 vis-à-vis, d'une part, de l'environnement extérieur du régulateur de pression 214 et notamment de l'air entourant le régulateur de pression 214 et, d'autre part, du fluide ayant traversé l'espace de passage 86 et l'orifice traversant 79 et circulant en direction de la sortie 28.

La partie cylindrique distale 258 est munie d'une gorge périphérique 264 de réception d'un troisième joint d'étanchéité 266.

La gorge périphérique 264 et le troisième joint 266 sont positionnés, suivant l'axe central Z1, à proximité du premier joint 78.

Le troisième joint 266 est propre à être en contact étanche contre une face interne de la première portion de cylindre 233, quelle que soit la position du culot 238. Le troisième joint 266 assure l'étanchéité entre la paroi circonférentielle 230 et la jupe 246, vis-à-vis du fluide provenant de l'entrée 26 et circulant en direction du corps de siège 48.

Les deuxième 262 et troisième 266 joints sont des joints toriques, par exemple en élastomère.

La pièce de réglage 240 est mécaniquement solidaire du corps de siège 48 et est, par exemple, soudée au corps de siège 48.

La pièce de réglage 240 est positionnée à l'intérieur de la jupe 246.

La pièce de réglage 240 comprend, suivant l'axe central Z1, une première extrémité ouverte 268 en regard de la membrane 52 et une deuxième extrémité ouverte 270 de passage du fût interne 248.

La pièce de réglage 240 comprend également un contour périphérique 272 muni d'une rainure 274 de guidage du pion 252, à l'intérieur de laquelle le pion 252 est positionné et déplaçable.

La pièce de réglage 240 comprend, en outre, une gorge périphérique externe 276 de réception d'un quatrième joint d'étanchéité 278 propre à être en appui contre une face interne de la jupe 246. Le quatrième joint 278 assure l'étanchéité entre la jupe 246 et la pièce de réglage 240, vis-à-vis du fluide F ayant traversé l'espace de passage 86 et l'orifice traversant 79 et circulant en direction de la sortie 28.

Le quatrième joint 278 est un joint torique, par exemple en élastomère.

Dans l'exemple des figures 2 à 6, la pièce de réglage 240 définit trois positions de maintien du culot par rapport au corps de siège, décalées l'une par rapport à l'autre suivant l'axe central Z1 et correspondant à trois positions différentes de la paroi de contact 254 par rapport au corps de siège 48.

Les trois positions de maintien correspondent chacune à des positions de maintien du culot 238, où le culot 238 est immobilisé par rapport au corps de siège 48, pour lesquelles l'effort d'appui E1 exercé par le ressort 56 sur la membrane 52 et le clapet mobile 50 est différent.

Plus précisément, la rainure de guidage 274 définit les trois positions de maintien du culot qui correspondent à trois positions du pion 252 dans la rainure 274.

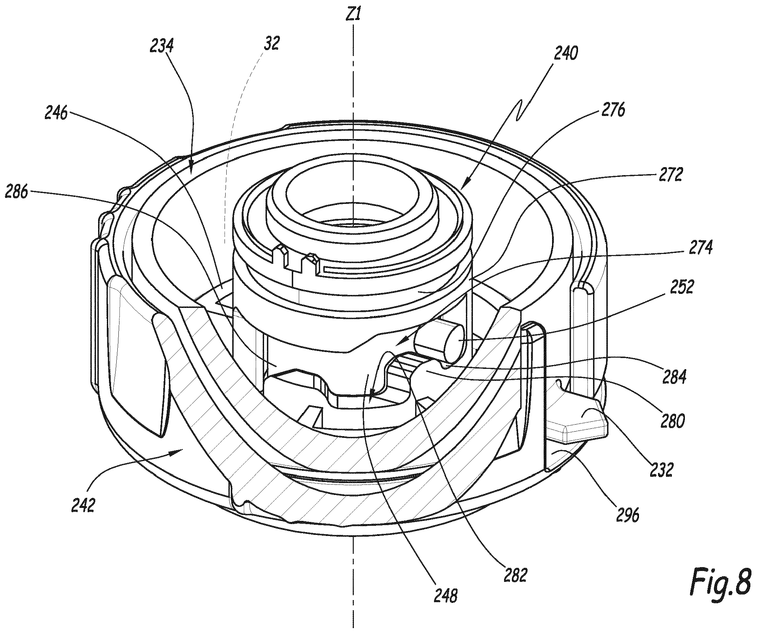

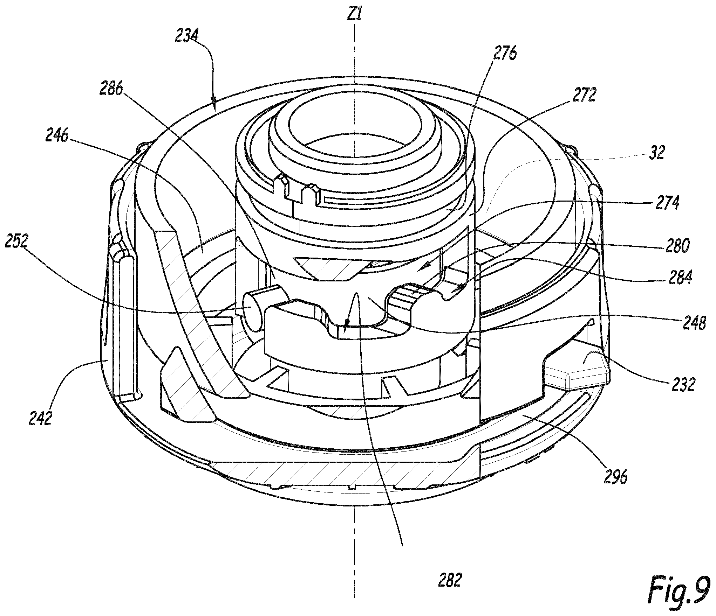

Comme représenté aux figures 8 et 9, La rainure de guidage 274 comprend un côté 280 définissant deux surfaces 282, 284 de maintien du pion 252, qui s'étendent dans un plan perpendiculaire à l'axe central Z1 et qui sont décalées les unes par rapport aux autres suivant l'axe central Z1.

Avantageusement et comme présenté aux figures 8 et 9, le côté 280 a une forme crénelée, de sorte que lorsque le pion 252 est en contact avec l'une des surfaces de maintien 282, 284, le pion 252 est immobilisé et maintenu en contact avec ladite surface de maintien 282, 284.

La rainure de guidage 274 comprend également une extrémité 286 ouverte, suivant l'axe central Z1, vers l'extérieur de la pièce de réglage 240 et positionnée en regard de l'aile principale 244.

La rainure 274 définit ainsi les positions de maintien qui correspondent respectivement au positionnement du pion 252 au niveau de l'extrémité ouverte 286 de la rainure 274, en contact avec la surface de maintien 282 et en contact avec la surface de maintien 284.

En d'autres termes, le pion 252 est déplaçable dans la rainure 274 entre trois positions correspondant respectivement, au positionnement du pion 252 au niveau de l'extrémité ouverte 286 de la rainure 274, en contact avec la surface de maintien 282 et en contact avec la surface de maintien 284.

Lorsque le pion 252 est positionné au niveau de l'extrémité ouverte 286 de la rainure 274, le culot 238 est dans une première position de maintien, présentée à la figure 9, et la jupe 246 et le premier joint d'étanchéité 78 définissent un espace 290 de circulation de fluide reliant l'entrée 26 à la sortie 28. La pression du fluide F n'est alors pas régulée et le fluide F circule librement entre l'entrée 26 et la sortie 28.

Lorsque le pion 252 est positionné au niveau de la surface de maintien 282, le culot 238 est dans une deuxième position de maintien, le premier joint d'étanchéité 78 est en contact étanche contre la jupe 246 du culot 238 et l'effort d'appui E1 a une première valeur prédéterminée. La pression du fluide F est alors régulée à une première grandeur, par exemple égale à 1 Bar.

Lorsque le pion 252 est positionné au niveau de la surface de maintien 284, le culot 238 est dans une troisième position de maintien, présentée à la figure 8, le premier joint d'étanchéité 78 est en contact étanche contre la jupe 246 du culot 238 et l'effort d'appui E1 à une deuxième valeur prédéterminée. La pression du fluide F est alors régulée à une deuxième grandeur supérieure à la première grandeur, par exemple égale à 3 Bars. De façon générale, la deuxième valeur prédéterminée est supérieure à la première valeur prédéterminée.

Le déplacement du pion 252 dans la rainure 274 et donc du culot 238 par rapport au corps de siège 48, permet de comprimer le ressort 56 et ainsi de régler l'effort d'appui E1 exercé par le ressort 56 sur la membrane 52 et le clapet 50.

Le bouton 242 est solidaire du culot 238.

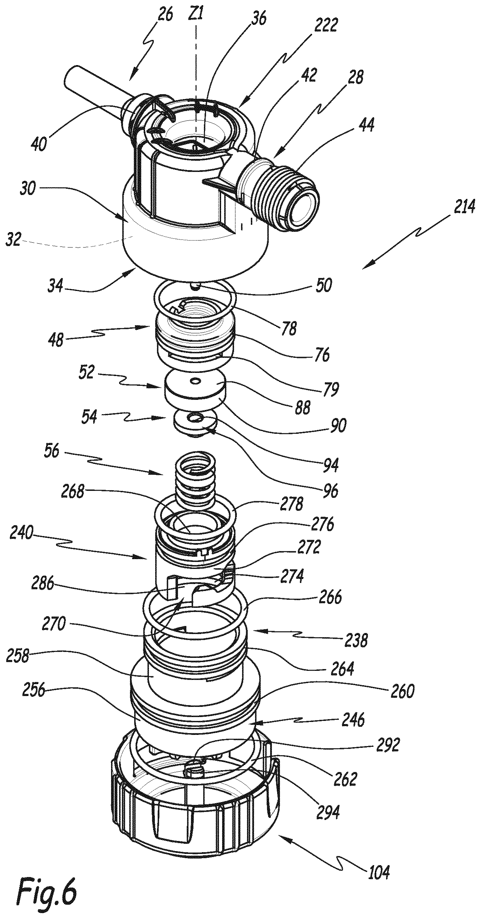

Plus précisément, le bouton 242 est, par exemple, fixé au culot 238 via deux pattes de fixation 292, 294, représentées à la figure 6, s'étendant suivant l'axe central Z1 à travers un orifice traversant de la paroi de contact 254. Les pattes de fixation 292, 294 comprennent, par exemple, des portions, non représentées, de maintien de la position des pattes suivant l'axe central Z1, qui s'étendent radialement à l'axe central Z1 et coopèrent avec la paroi de contact 254.

Le bouton 242 comprend une fente 296 de réception de la languette 232 à l'intérieur de laquelle la languette 232 est positionnée.

La fente 296 a une forme complémentaire de la rainure de guidage 274, de sorte que lorsque le pion 252 se déplace dans la rainure de guidage 274, la languette 232 se déplace dans la fente 296.

Plus précisément, la fente 296 est conformée pour que lorsque le pion 252 est positionné au niveau de l'extrémité ouverte 286 de la rainure guidage 274, la languette 232 soit positionnée en appui contre un bord de la fente 296 qui maintien le bouton 242 en position. Ainsi le pion 252 est maintenu dans la rainure de guidage 274 et le culot 238 reste assemblé avec la pièce de réglage 240.

Dans une variante non représentée, la pièce de réglage 240 comprend le pion alors que le culot 238 comprend la rainure de guidage.

Selon une autre variante, le premier joint d'étanchéité 78 est en contact étanche contre la jupe, quelle que soit la position du culot 238. Dans cette variante, la forme de la paroi circonférentielle est adaptée pour que lorsque le culot 238 est dans la première position, la jupe et la paroi circonférentielle 230 définissent un espace de circulation de fluide reliant l'entrée 26 à la sortie 28, tandis que lorsque le culot 238 est dans les deuxième et troisième positions, la jupe 246 est en contact étanche avec la paroi circonférentielle 240.

Selon une autre variante, la rainure de guidage 274 définit une seule surface de maintien ou plus de deux surfaces de maintien.

Selon une autre variante, la rainure de guidage 274 ne comprend pas d'extrémité ouverte et définit deux surfaces de maintien.

Selon une autre variante, un échappement d'air est prévu au niveau du culot 238 afin que la modification de la position du culot 238, qui entraîne la compression du ressort 56, n'engendre pas de compression d'air dans l'espace de réception 60.

Les avantages présentés ci-dessus pour le premier mode de réalisation sont également valables pour le deuxième mode de réalisation.

Les régulateurs 14 et 214 forment une gamme de régulateurs de pression dont le corps de siège, le clapet la membrane et le ressort sont identiques.

De plus, dans le deuxième mode de réalisation, le fait que la pièce de réglage 240 définissent plusieurs positions de maintien du culot 238, qui correspondent à des positions différentes de la paroi de contact 254 par rapport au corps de siège 48, permet de régler la pression du fluide délivré en sortie simplement à partir de l'organe de réglage 236 et notamment de la manipulation du bouton 242.

Cela permet de faciliter le réglage de la pression du fluide F en sortie 28, puisqu'il suffit de manipuler le bouton 242 sans séparer le culot 238 du reste du régulateur de pression 214, c'est-à-dire sans désassembler le régulateur de pression et notamment le dispositif de régulation 224 du corps principal 222.

Par ailleurs l'utilisation du pion 252 associé à la rainure de guidage 274 permet de positionner simplement le culot 238 par rapport au corps de siège 48 et de maintenir le culot 238 par rapport au corps de siège 48 dans une position désirée.

En outre, le fait que le culot 238 soit propre à être déplacé dans une position où le corps de siège 48 et la jupe 246 définissent un espace 290 de circulation de fluide reliant l'entrée 26 à la sortie 28 permet de désactiver l'utilisation du régulateur de pression 214 et de laisser le fluide F circuler librement entre l'entrée 26 et la sortie 28.

Dans l'exemple des figures 5 à 9, la pièce de réglage 240 définit trois positions de maintien du culot 238 et permet à la fois un réglage de la pression du fluide en sortie entre deux valeurs prédéterminés et l'activation ou la désactivation du régulateur de pression, le tout à partir d'un unique organe de réglage 236 et notamment via la manipulation d'un seul bouton 242. L'utilisation du régulateur de pression 214 est donc simplifiée.

Les modes de réalisation et variantes envisagés ci-dessus sont propres à être combinés entre eux pour donner lieu à d'autres modes de réalisation de l'invention.

## Revendications

1. Régulateur de pression (14 ; 214) comprenant :
un dispositif (24 ; 224) de régulation de la pression d'un fluide et un corps principal (22 ; 222) comportant une entrée (26) de réception du fluide, une paroi circonférentielle (30 ; 230) délimitant un logement (32) de réception du dispositif de régulation et une sortie (28) de distribution du fluide, le dispositif de régulation (24 ; 224) étant positionné dans le logement (32) entre l'entrée (26) de réception du fluide et la sortie (28) de distribution du fluide et comportant :
- un corps de siège (48) définissant un orifice (64) de passage du fluide,
- un clapet (50) mobile par rapport au corps de siège (48), suivant un axe central (Z1) du corps de siège, entre une position fermée dans laquelle le clapet (50) obstrue l'orifice de passage (64) et une position ouverte dans laquelle le clapet (50) libère l'orifice de passage (64),
- une membrane (52) mécaniquement solidaire du clapet (50) et
- un ressort (56) d'appui de la membrane (52) contre le corps de siège (48), propre à exercer un effort d'appui sur la membrane (52), la membrane étant mobile par rapport au corps de siège (48) entre une position ouverte, dans laquelle la membrane (52) définit avec le corps de siège un espace (86) de passage du fluide ayant traversé l'orifice de passage (64), propre à guider le fluide vers la sortie (28), et une position fermée dans laquelle la membrane (52) est en contact étanche avec le corps de siège (48) et obstrue l'espace de passage (86),
**caractérisé en ce que** le corps de siège (48) est une pièce distincte du corps principal (22) et est muni d'une gorge périphérique (76) de réception d'un joint d'étanchéité (78) propre à être en appui contre la paroi circonférentielle (30) ou contre une jupe (246) d'un culot (238) disposée entre la paroi circonférentielle (230) et le corps de siège (48).

2. Régulateur selon la revendication 1, **caractérisé en ce que** le ressort (56) est configuré pour que le clapet mobile (50) soit en position fermée et la membrane (52) en position ouverte lorsque le fluide exerce sur le clapet mobile (50) et la membrane (52) un effort supérieur à une première valeur de seuil prédéterminée, et pour que la membrane (52) soit en position fermée et le clapet mobile (50) en position ouverte lorsque le fluide exerce sur le clapet mobile (50) et la membrane (52) un effort inférieur à une deuxième valeur de seuil prédéterminée, la première valeur de seuil prédéterminée étant supérieure à la deuxième valeur de seuil prédéterminée.

3. Régulateur selon la revendication 2, **caractérisé en ce que** le clapet mobile (50) comprend une extrémité amont (80) d'obturation de l'orifice de passage (64), une extrémité aval (82) et une tige (84) s'étendant à travers l'orifice de passage (86) et reliant l'extrémité amont (80) à l'extrémité aval (82) et **en ce que** le dispositif de régulation (24 ; 224) comprend un tampon (54) faisant l'interface entre, d'une part, le ressort (56) et, d'autre part, la membrane (52) et le clapet mobile (50).

4. Régulateur selon l'une quelconque des revendications précédentes, **caractérisé en ce que** le corps principal (22) comprend, suivant l'axe central (Z1), une extrémité ouverte (34) d'assemblage du dispositif (24 ; 224) de régulation de la pression avec le corps principal (22 ; 222) et une extrémité fermée (36), la paroi circonférentielle (30 ; 230) reliant l'extrémité ouverte (34) et l'extrémité fermée (36).

5. Régulateur selon l'une quelconque des revendications précédentes, **caractérisé en ce que** le joint d'étanchéité (78) est en appui contre la paroi circonférentielle (30), et **en ce que** le dispositif de régulation (24) comprend un couvercle (58) fixé au corps principal (22), le couvercle (58) comprenant un contour périphérique (98) définissant un espace (60) de réception du ressort (56), le contour périphérique (98) comprenant, suivant l'axe central (Z1) et par rapport au corps de siège (48), une extrémité distale (102) d'appui du ressort et une extrémité proximale (74), définissant une ouverture (101) en regard de la membrane (52), le ressort (56) étant positionné entre l'extrémité distale (102) et la membrane (52).

6. Régulateur selon la revendication 5, **caractérisé en ce que** le corps de siège (48) comprend une paroi périphérique (70) délimitant une zone (72) de réception de la membrane (52) et de l'extrémité proximale (74) du couvercle et **en ce que** la membrane comprend un voile (88) d'appui contre le corps de siège (48) s'étendant radialement à l'axe central (Z1) et une paroi cylindrique externe (90) s'étendant depuis le voile d'appui (88) en direction du couvercle (58), la paroi cylindrique externe (90) étant coincée radialement entre la paroi périphérique (70) et l'extrémité proximale (74).

7. Régulateur selon l'une quelconque des revendications 1 à 4, **caractérisé en ce que** le dispositif de régulation (224) comprend un organe (236) de réglage de la pression du fluide en sortie (28), l'organe de réglage (236) comprenant le culot (238) et une pièce (240) de réglage de la position du culot (238) par rapport au corps de siège (48), la pièce de réglage (240) définissant au moins deux positions de maintien du culot (238) par rapport au corps de siège (48), décalées l'une par rapport à l'autre suivant l'axe central (Z1), et **en ce que** pour au moins une position de maintien du culot (238), le joint d'étanchéité (78) est en contact étanche contre la jupe (246) du culot (238).

8. Régulateur selon la revendication 7, **caractérisé en ce que** le culot (238) comprend une paroi de contact (254), en contact avec le ressort (56), s'étendant radialement à la jupe (246), **en ce que** le ressort (56) est positionné entre la membrane (52) et la paroi de contact (254), et **en ce que** les positions de maintien du culot (238) correspondent à des positions différentes de la paroi de contact (254) par rapport au corps de siège (48).

9. Régulateur selon la revendication 7 ou 8, **caractérisé en ce que**, pour l'une des positions de maintien du culot (238) par rapport au corps de siège (48), la jupe (246) et le joint d'étanchéité (78) définissent un espace (290) de circulation de fluide reliant l'entrée (26) à la sortie (28).

10. Régulateur selon la revendication 9, **caractérisé en ce que** la pièce de réglage (240) définit au moins trois positions de maintien du culot (238) décalées les unes par rapport aux autres suivant l'axe central (Z1), **en ce que** la jupe (246) comprend une gorge périphérique de réception d'un joint d'étanchéité supplémentaire (266) en contact étanche avec la paroi circonférentielle (230) et **en ce que**, pour deux des positions de maintien du culot (238), le joint d'étanchéité (78) est en contact étanche contre la jupe (246).

11. Gamme de régulateurs de pression, comprenant au moins deux régulateurs de pression (14, 214), **caractérisé en ce que** la gamme comprend un premier régulateur (14) selon la revendication 5 ou 6 et un deuxième régulateur (214) selon l'une quelconque des revendications 7 à 10, et **en ce que** dans les premier (14) et deuxième (214) régulateurs, le corps de siège (48), le clapet (50) et la membrane (52) sont identiques.

12. Système de pulvérisation comprenant un réservoir (12) de fluide, une buse (16) de pulvérisation du fluide et un régulateur de pression (14 ; 214) monté entre le réservoir de fluide (12) et la buse de pulvérisation (16), **caractérisé en ce que** le régulateur de pression (14 ; 214) est selon l'une quelconque des revendications 1 à 10.

## Patentansprüche

1. Druckregulator (14; 214) aufweisend:
eine Vorrichtung (24; 224) zur Regulierung des Drucks eines Fluid und einen Hauptkörper (22; 222), der aufweist einen Einlass (26) zum Erhalt des Fluid, eine Umfangswand (30; 230), die eine Aufnahme (32) zur Aufnahme der Regulierungs-Vorrichtung begrenzt, und einen Auslass (28) zur Ausgabe des Fluid, wobei die Regulierungs-Vorrichtung (24; 224) in der Aufnahme (32) positioniert ist zwischen dem Einlass (26) zum Erhalt des Fluid und dem Auslass (28) zur Ausgabe des Fluid und aufweist:
- einen Sitz-Körper (48), der eine Öffnung (64) zum Durchlass des Fluid definiert,
- ein Ventil (50), das bezüglich des Sitz-Körpers (48) bewegbar ist entlang einer zentralen Achse (Z1) des Sitz-Körpers zwischen einer Geschlossen-Position, in welcher das Ventil (50) die Durchlass-Öffnung (64) versperrt, und einer Offen-Position, in welcher das Ventil (50) die Durchlass-Öffnung freigibt,
- eine Membran (52), die mit dem Ventil (50) mechanisch fest verbunden ist, und
- eine Feder (56) zum Stützen der Membran (52) gegen den Sitz-Körper (48), die imstande ist, eine Stützkraft auf die Membran (52) auszuüben, wobei die Membran bewegbar ist bezüglich des Sitz-Körpers (48) zwischen einer Offen-Position, in welcher die Membran (52) mit dem Sitz-Körper einen Raum (86) zum Durchlass des Fluid definiert, der die Öffnung (64) querend hat und der imstande ist, das Fluid zum Ausgang (28) hin zu führen, und einer Geschlossen-Position, in welcher die Membran (52) in dichtem Kontakt mit dem Sitz-Körper (48) ist und den Durchlass-Raum (86) versperrt,
**dadurch gekennzeichnet, dass** der Sitz-Körper (48) ein von dem Hauptkörper (22) verschiedenes Teil ist und ausgestattet ist mit einer Umfangsnut (76) zur Aufnahme eines Dichtungsteils (78), das imstande ist, gegen die Umfangswand (30) oder gegen einen Rock (246), der zwischen der Umfangswand (30) und dem Sitz-Körper (48) angeordnet ist, eines Sockels (238) anzuliegen.

2. Regulator gemäß Anspruch 1, **dadurch gekennzeichnet, dass** die Feder (56) konfiguriert ist, damit das bewegbare Ventil (50) in der Geschlossen-Position ist und die Membran (52) in der Offen-Position ist, wenn das Fluid auf das bewegbare Ventil (50) und die Membran (52) eine Kraft ausübt, die größer ist als ein erster vorbestimmter Grenzwert, und damit die Membran (52) in der Geschlossen-Position ist und das bewegbare Ventil (50) in Offen-Position ist, wenn das Fluid auf das bewegbare Ventil (50) und die Membran (52) eine Kraft ausübt, die kleiner als ein zweiter vorbestimmter Grenzwert ist, wobei der erste vorbestimmte Grenzwert größer ist als der zweite vorbestimmte Grenzwert.

3. Regulator gemäß Anspruch 2, **gekennzeichnet dadurch, dass** das bewegbare Ventil (50) aufweist ein vorderes Ende (80) zur Versperrung der Durchlass-Öffnung (64), ein hinteres Ende (82) und eine Stange (84), die sich durch die Durchlass-Passage (86) hindurcherstreckt und das vordere Ende (80) mit dem hinteren Ende (82) verbindet, und dadurch, dass die Vorrichtung zur Regulierung (24, 224) aufweist einen Stempel (54), der die Schnittstelle bildet zwischen, einerseits, der Feder (56) und, andererseits, der Membran (52) und dem bewegbaren Ventil (50).

4. Regulator gemäß irgendeinem der vorhergehenden Ansprüche, **dadurch gekennzeichnet, dass** der Hauptkörper (22) aufweist, entlang der zentralen Achse (Z1), ein offenes Ende (34) zur Montage der Vorrichtung (24, 224) zur Regulierung des Drucks mit dem Hauptkörper (22; 222) und ein geschlossenes Ende (36), wobei die Umfangswand (30; 230) das offene Ende (34) mit dem geschlossenen Ende (36) verbindet.

5. Regulator gemäß irgendeinem der vorhergehenden Ansprüche, **gekennzeichnet dadurch, dass** das Dichtungsteil (78) gegen die Umfangswand (30) anliegt, und dadurch, dass die Vorrichtung zur Regulierung (24) aufweist einen Deckel (58), der an dem Hauptkörper (22) fixiert ist, wobei der Deckel (58) aufweist eine Umfangskontur (98), die einen Raum (60) definiert zur Aufnahme der Feder (56), wobei die Umfangskontur (98) aufweist, entlang der zentralen Achse (Z1) und bezüglich des Sitz-Körpers (48), ein distales Ende (102) zur Anlage der Feder und ein proximales Ende (74), definierend eine Öffnung (101) gegenüber der Membran (52), wobei die Feder (56) zwischen dem distalen Ende (102) und der Membran (52) positioniert ist.

6. Regulator gemäß Anspruch 5, **gekennzeichnet dadurch, dass** der Sitz-Körper (48) aufweist eine Umfangswand (70), die eine Zone (72) zur Aufnahme der Membran (52) und des proximalen Endes (74) des Deckels begrenzt, und dadurch, dass die Membran aufweist eine Abdeckung (88) zur Abstützung gegen den Sitz-Körper (48), die sich radial zur zentralen Achse (Z1) erstreckt, und eine äußere zylindrische Wand (90), die sich ausgehend von der Abdeckung zur Abstützung (88) in Richtung des Deckels (58) erstreckt, wobei die äußere zylindrische Wand (90) radial zwischen die Umfangswand (70) und das proximale Ende (74) geklemmt ist.

7. Regulator gemäß irgendeinem der Ansprüche 1 bis 4, **gekennzeichnet dadurch, dass** die Vorrichtung zur Regulierung (224) aufweist ein Organ (236) zur Regulierung des Drucks des Fluid am Auslass (28), wobei das Organ zur Regulierung (236) aufweist den Sockel (238) und ein Teil (240) zur Regulierung der Position des Sockels (238) bezüglich des Sitz-Körpers (48), wobei das Teil zur Regulierung (240) wenigstens zwei Halte-Positionen des Sockels (238) bezüglich des Sitz-Körpers (48) definiert, die entlang der zentralen Achse (Z1) im Abstand voneinander sind, und dadurch, dass für wenigstens eine Halte-Position des Sockels (238) das Dichtungsteil (78) im dichten Kontakt gegen den Rock (246) des Sockels (238) ist.

8. Regulator gemäß Anspruch 7, **gekennzeichnet dadurch, dass** der Sockel (238) aufweist eine Kontakt-Wand (254), die in Kontakt mit der Feder (56) ist und die sich radial zu dem Rock (246) erstreckt, dadurch, dass die Feder (56) zwischen der Membran (52) und der Kontakt-Wand (254) positioniert ist, und dadurch, dass die Halte-Positionen des Sockels (238) zu unterschiedlichen Positionen der Kontakt-Wand (254) bezüglich des Sitz-Körpers (48) korrespondieren.

9. Regulator gemäß Anspruch 7 oder 8, **gekennzeichnet dadurch, dass** für eine der Halte-Positionen des Sockels (238) bezüglich des Sitz-Körpers (48) der Rock (246) und das Dichtungsteil (78) einen Raum (290) zur Zirkulation des Fluid definieren, der den Einlass (26) mit dem Auslass (28) verbindet.

10. Regulator gemäß Anspruch 9, **gekennzeichnet dadurch, dass** das Regulierungs-Teil (240) wenigstens drei Halte-Positionen des Sockels (238) definiert, die entlang der zentralen Achse (Z1) im Abstand voneinander sind, dadurch, dass der Rock (246) ein Umfangsnut aufweist zur Aufnahme eines zusätzlichen Dichtungsteils (266) in dichtem Kontakt mit der Umfangswand (230), und dadurch, dass für zwei der Halte-Positionen des Sockels (238) das Dichtungsteil (78) in dichtem Kontakt gegen den Rock (246) ist.

11. Serie von Druck-Regulatoren, aufweisend wenigstens zwei Druck-Regulatoren (14, 214), **gekennzeichnet dadurch, dass** die Serie aufweist einen ersten Regulator (14) gemäß Anspruch 5 oder 6 und einen zweiten Regulator (214) gemäß irgendeinem der Ansprüche 7 bis 10, und dadurch, dass bei dem ersten (14) und dem zweiten Regulator (214) der Sitz-Körper (48), das Ventil (50) und die Membran (52) identisch sind.

12. System zur Zerstäubung, aufweisend einen Fluid-Behälter (12), eine Düse (16) zur Zerstäubung des Fluid und einen Druckregulator (14; 214), der zwischen den Fluid-Behälter (12) und die Zerstäubungs-Düse (16) montiert ist, **dadurch gekennzeichnet, dass** der Druckregulator (14; 214) gemäß irgendeinem der Ansprüche 1 bis 10 ist.

## Claims

1. A pressure regulator (14; 214), comprising:
- a device (24; 224) for regulating the pressure of a fluid and a main body (22; 222) including an inlet (26) for receiving the fluid, a circumferential wall (30; 230) defining a housing (32) for receiving the regulating device, and a dispensing outlet (28) for the fluid, the regulating device (24) being positioned in the housing (32) between the inlet (26) for receiving the fluid and the outlet (28) for dispensing the fluid and including:
- a seat (48) body defining a fluid passage orifice (64),
- a gate (50) movable relative to the seat body (48), along the central axis (Z1) of the seat body (48), between a closed position in which the gate (50) obstructs the passage orifice (64) and an open position in which the gate (50) frees the passage orifice (64),
- a membrane (52) mechanically secured to the gate (50), and
- a bearing spring (56) for pressing the membrane (52) against the seat body (48), able to exert a bearing force on the membrane (52), the membrane being movable relative to the seat body (48) between an open position, in which the membrane (52) defines, with the seat body, a passage space (86) the fluid having crossed through the passage orifice (64), able to guide the fluid toward the outlet (28), and a closed position in which the membrane (52) is in tight contact with the seat body (48) and obstructs the passage space (86),
**characterized in that** the seat body (48) is a separate part from the main body (22) and is provided with a peripheral groove (76) for receiving a sealing gasket (78) able to bear against the circumferential wall (30) or against a skirt (246) of a butt (238) positioned between the circumferential wall (230) and the seat body (48).

2. The regulator according to claim 1, **characterized in that** the spring (56) is configured so that the moving gate (50) is in the closed position and the membrane (52) is in the open position when the fluid exerts a force on the moving gate (50) and the membrane (52) greater than a first predetermined threshold value, and so that the membrane (52) is in the closed position and the moving gate (50) is in the open position when the fluid exerts a force on the moving gate (50) and the membrane (52) that is below a second predetermined threshold value, the first predetermined threshold value being higher than the second predetermined threshold value.

3. The regulator according to claim 2, **characterized in that** the moving gate (50) comprises an upstream end (80) for closing off the passage orifice (64), a downstream end (82) and a rod (84) extending through the passage orifice (86) and connecting the upstream end (80) to the downstream end (82), and **in that** the regulator device (24; 224) comprises a buffer (54) acting as the interface between the spring (56) on the one hand, and the membrane (52) and the moving gate (50) on the other hand.

4. The regulator according to any one of the preceding claims, **characterized in that** the main body (22) comprises, along the central axis (Z1), an open end (34) for assembling the pressure regulating device (24; 224) with the main body (22; 222) and a closed end (36), the circumferential wall (30; 230) connecting the open end (34) and the closed end (36).

5. The regulator according to any one of the preceding claims, **characterized in that** the sealing gasket (78) bears against the circumferential wall (30), and **in that** the regulator device (24) comprises a cover (58) fastened to the main body (22), the cover (58) comprising a peripheral contour (98) defining a receiving space (60) for the spring (56), the peripheral contour (98) comprising, along the central axis (Z1) and relative to the seat body (48), a distal bearing end (102) of the spring and a proximal end (74), defining an opening (101) opposite the membrane (52), the spring (56) being positioned between the distal end (102) and the membrane (52).

6. The regulator according to claim 5, **characterized in that** the seat body (48) comprises a peripheral wall (70) defining a receiving zone (72) for the membrane (52) and the proximal end (74) of the cover and **in that** the membrane comprises a bearing web (88) against the seat body (48) extending radially to the central axis (Z1) and an outer cylindrical wall (90) extending from the bearing web (88) toward the cover (58), the outer cylindrical wall (90) being radially jammed between the peripheral wall (70) and the proximal end (74).

7. The regulator according to any one of claims 1 to 4, **characterized in that** the regulator device (224) comprises a member (236) for adjusting the pressure of the fluid at the outlet (28), the adjusting member (236) comprising the butt (238) and a part (240) for adjusting the position of the butt (238) relative to the seat body (48), the adjusting part (240) defining at least two positions maintaining the butt (238) relative to the seat body (48), offset relative to one another along the central axis (Z1) and **in that**, for at least one maintaining position of the butt (238), the sealing gasket (78) is in tight contact against the skirt (246) of the butt (238).

8. The regulator according to claim 7, **characterized in that** the butt (238) comprises a contact wall (254), in contact with the spring (56), extending radially to the skirt (246), **in that** the spring (56) is positioned between the membrane (52) and the contact wall (254), and **in that** the maintaining positions of the butt (238) correspond to different positions of the contact wall (254) relative to the seat body (48).

9. The regulator according to claim 7 or 8, **characterized in that**, for one of the maintaining positions of the butt (238) relative to the seat body (48), the skirt (246) and the sealing gasket (78) define a fluid circulation space (290) connecting the inlet (26) to the outlet (28).

10. The regulator according to claim 9, **characterized in that** the adjusting part (240) defines at least three maintaining positions for the butt (238) offset relative to one another along the central axis (Z1), **in that** the skirt (246) comprises a peripheral groove for receiving an additional sealing gasket (266) in tight contact with the circumferential wall (230) and **in that**, for two of the maintaining positions for the butt (238), the sealing gasket (78) is in tight contact against the skirt (246).

11. A range of pressure regulators, comprising at least two pressure regulators (14, 214), **characterized in that** the first range comprises a first regulator (14) according to claim 5 or 6 and a second regulator (214) according to any one of claims 7 to 10, and **in that** in the first (14) and second (214) regulators, the seat body (48), the gate (50) and the membrane (52) are identical.

12. A spray system comprising a fluid reservoir (12), a spray nozzle (16) for the fluid and a pressure regulator (14; 214) mounted between the fluid reservoir (12) and the spray nozzle (16), **characterized in that** the pressure regulator (14; 214) is according to any one of claims 1 to 10.
